(19) **Europäisches Patentamt**
**European Patent Office**
**Office européen des brevets**

(11) **EP 2 278 179 B1**

(12) **EUROPEAN PATENT SPECIFICATION**

(45) Date of publication and mention
of the grant of the patent:
**14.03.2012 Bulletin 2012/11**

(51) Int Cl.:
*F16C 19/18* (2006.01)     *F16C 33/58* (2006.01)

(21) Application number: **10170250.4**

(22) Date of filing: **21.07.2010**

(54) **Outer ring of rolling bearing**

Wälzlageraussenring

Bague extérieur d'un palier à roulement

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **21.07.2009 IT TO20090548**

(43) Date of publication of application:
**26.01.2011 Bulletin 2011/04**

(73) Proprietor: **Aktiebolaget SKF**
**415 50 Göteborg (SE)**

(72) Inventors:
• **Re, Paolo**
 **I-10042 Nichelino (Torino) (IT)**
• **Richaud, Stefano**
 **I-10069 Villar Perosa (Torino) (IT)**

(74) Representative: **Fioravanti, Corrado et al**
 **Jacobacci & Partners S.p.A.**
 **Corso Emilia 8**
 **I-10152 Torino (IT)**

(56) References cited:
 **EP-A1- 1 672 230     WO-A1-2008/056446**
 **DE-U1- 8 702 275     US-A1- 2006 171 624**

## Description

The present invention relates to a rolled outer ring of an angular contact rolling bearing with a dual set of bearing balls. The invention is particularly intended to find application in the hub of the wheel of a small-to-medium sized car.

Many ways of making rolling bearings with an outer ring rolled from a thin-walled metal element have been proposed in the past, an example of which is set out in patent publication DE 26 36 903 A1. So far, that technology has yielded unsatisfactory results from an industrial point of view because the bearings made by such rolling processes have exhibited insufficient durability for actual application in the automotive industry. Too high a percentage of those bearing rings have exhibited cracks or breakages when subjected to the operating loads, thus in practice ruling out the practical application of what would be a highly advantageous design from a financial point of view. In other cases rings have broken even while they were being rolled.

Patent DE 924 924 C discloses an outer ring for a rolling bearing with a dual set of bearing balls, made by plastic deformation of a thin-walled metal element. The general shape of the outer ring is defined in the preamble of Claim 1.

WO2008/056446A1 discloses the features of the first part of claim 1.

It is an object of the present invention to provide an outer ring for a bearing in which the aforementioned disadvantages are completely eliminated.

This object is achieved, in accordance with the present invention, with a bearing ring having the features defined in the appended claims.

A number of preferred but non-restrictive embodiments of the invention will now be described with reference to the attached drawings, in which:

Figure 1        is a partial axial section through a bearing ring in a first embodiment of the invention;

Figure 2        is a partial axial section through an angular contact bearing with a dual set of bearing balls comprising the ring shown in Figure 1;

Figure 3        is an enlarged view of part of the ring shown in Figure 1; and

Figures 4 to 7     show in diagrammatic form other embodiments of the invention.

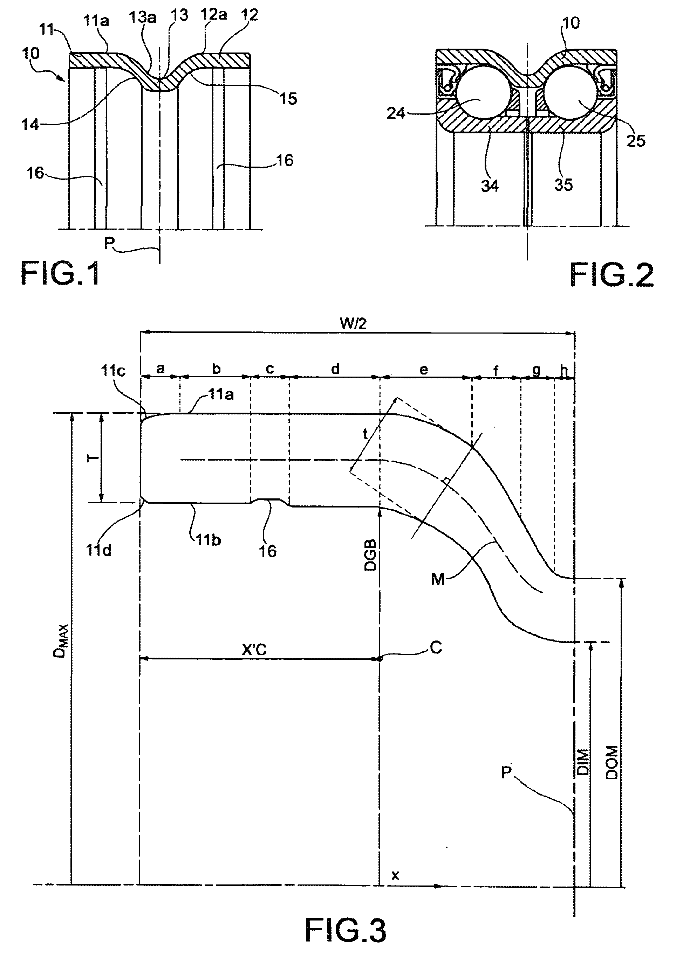

Referring initially to Figures 1 and 2, the number 10 is a general reference for a ring according to the present invention. The ring 10 constitutes the radially outer ring of a bearing for the hub of the wheel of a motor vehicle, and has two tubular cylindrical side portions 11, 12 with outer cylindrical surfaces 11a, 12a and a central portion 13 with an outer surface 13a shaped as a groove with a U-shaped axial cross section radially recessed into the cylindrical surfaces 11a and 12a.

The ring 10 has an axially symmetrical structure with respect to the central axis x coinciding with the axis of rotation of the angular contact rolling bearing with a dual set of bearing balls (Figure 2), of which the ring 10 constitutes the outer ring which forms the outer raceways 14, 15 for two respective series of balls 24, 25. The ring 10 is also symmetrical with respect to a central radial mid-plane P. The two raceways 14, 15 are formed by portions of two respective toroidal surfaces which both have the same constant radius of curvature through an angle of not less than 20° and not more than 45°. The radius of curvature is between 4 and 6 mm. The centre of curvature is marked C (Figure 3). The balls 24, 25 are radially interposed between the outer ring 10 and two respective radially inner rings 34, 35 which are adjacent in the axial direction. The axial dimension of the recessed central surface 13a is such as to encompass regions radially aligned with the outer raceways 14, 15. When the outer ring 10 is placed in a cylindrical housing (not shown) in the suspension of a motor vehicle, there is no appreciable contact between the housing and the recessed outer surface 13a of the ring 10. The contact with the housing is limited to the cylindrical side surfaces 11a and 12a.

The ring 10 is shown in Figures 1 and 3 as being formed at the end of a rolling operation. The ring 10 is made from a thin-walled tubular or annular piece, which may by way of indication have a radial thickness of between about 1 mm and about 6 mm. The ring 10 is made of a type of steel having a carbon content (about 1%) such as to make it suitable to be subjected, after rolling, to a through-hardening heat treatment, with a single quenching/tempering cycle. Particularly preferred is "100Cr6" steel, which can take a highly precise final geometry after quenching, with suitable metallurgical properties.

Referring now to Figure 3:

- x is the abscissa of a point lying on the axis of axial symmetry with respect to the end of the ring 10;
- w is the distance between the two opposite axial ends of the ring 10;
- x' is the relative position of a point of abscissa x lying on the axis of axial symmetry, defined as:

$$x' = \frac{x}{w}$$

- Y is the point identified by the intersection between the mid-line M of the ring and an axial plane - that is, a plane passing through the central axis of rotation (or axis of axial symmetry);
- t is the thickness of the ring measured along a straight line perpendicular to the mid-line M passing through the point y
- xc' is the relative position of the centre of curvature C of the raceways
- T is the thickness of the ring where x'=xc, i.e. at the centre of curvature C;
- t' is the relative thickness of the ring 10, defined as

$$t' = \frac{t}{T}$$

- DI is the inside diameter of the ring 10 in a generic relative position x'
- DMAX is the maximum outside diameter of the ring 10
- DI' is the relative inside diameter, defined as

$$DI' = \frac{DI}{DMAX}$$

The geometry of the ring according to the invention will now be defined in its various segments which follow each other in the axial direction, using the parameters identified above and beginning at one of its two axial ends, where the x abscissa is zero.

a) for 0 < x' < 0.02        0.5 < t' < 0.8
In the first axial terminal segment, labelled "a", the outer cylindrical surface 11a and the inner cylindrical surface 11b of the ring are conically chamfered or rounded off at 11c, 11d, reducing the radial thickness of the ring in the axially outward direction for several reasons:

- to facilitate the insertion of the ring into its housing (not shown), which is formed by the suspension of a car,
- to facilitate the interference fitting of a bearing seal to seal the gap between the outer and inner rings of the bearing, and
- to optimize the distribution of the structural tensions in the region of the transition towards the axial ends of the ring.

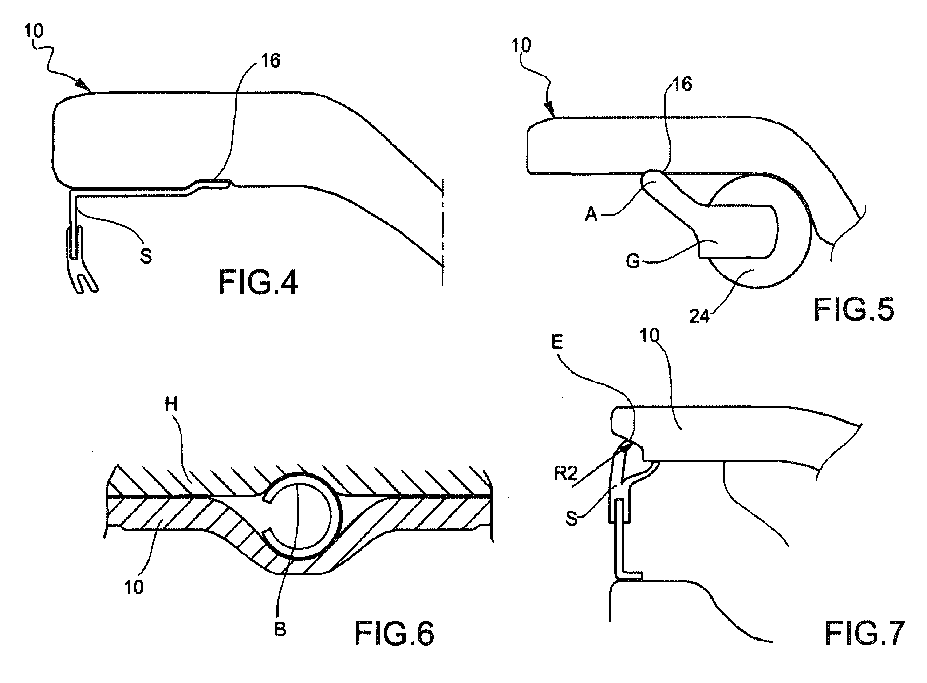

b) for 0.025 < x' < 0.140          0.96 < t' < 1, where t' is constant.
Immediately following the conical or rounded parts 11c, 11d is a tubular cylindrical segment labelled "b", of constant cross section: this serves to distribute the stresses caused by the radial interference fit of the ring in its housing. The segment "b" optimally distributes with interference the contact forces from the centre of the ring outwards. Throughout the segment "b", the ring 10 exerts on the outer housing a substantially constant radial pressure.
c) for 0.15 < x' < 0.185        0.93 < t' < 0.90
From the inner cylindrical surface 11b of the ring there extends a circumferential groove 16 of limited depth, which provides a region of transition of the concentrations between the outer constant-section part, which is not involved in the contact, and the cross section of the raceways, which are involved in the contact forces of the rotating elements. The groove 16 provides a seat of axial retention for the seals S (Fig. 4). As an alternative, the groove 16 may provide a guide for the cages G which have an outward extension A (Fig. 5). Placing this groove in this position creates an area of evacuation for the grinding wheel used to grind the raceways.
d) for 0.20 < x' < 0.25        t'=1
Immediately following the groove 16, the ring has a segment "d" which is thicker than the segment "b", and therefore less deformable, so as to distribute over a correspondingly larger area of the housing the stresses resulting from the mostly radial loads transmitted to the ring 10 by the bearing balls.
e) for 0.26 < x' < 0.28        1.01 < t' < 1.04
The thickness of the ring 10 is greatest in this region "e" (referred to here as the "non-contacting region") to handle the bending stresses between the cylindrical region "d", which is in contact with the housing, and the axially central region of the ring 10, which is radially recessed and forms a central U-shaped groove, where the ring 10 does not contact the housing.
f) for 0.29 < x' < 0.40          0.69 < t' < 0.98
In this next non-contacting segment "f", the relative thickness t' decreases as x' increases from t' = 0.98 to t' = 0.69 in the region 0.29 < x < 0.40. This shape optimizes the flow of material during the plastic deformation to minimize stresses during the forming process and prevent cracks and tears developing in the metallic material subjected to rolling.

g) for 0.40 < x' < 0.42        0.81 > DI' > 0.795

In this segment the relative inside diameter DI' decreases as X' increases with values between 0.81 and 0.795

h) for 0.42 < X' < 0.475        0.795 > t' > 0.785

In this segment, DI' decreases as X' increases between 0.795 and 0.785.

In the neighbourhood of 0.42 < x' < 0.44 t' = 0.89. Here, the relative thickness reaches its maximum value of 0.89, thus creating a stronger region in the transition between the curved part containing the raceways and the horizontal part which joins together with two halves of the ring, in such a way as to withstand the bending loads under operational conditions.

i) for 0.475 < X' < 0.50 the value DI' is constant. The inside profile defined by the path of the parameter DI' with respect to the relative position x' defined in the intervals g), h) and i) is for the purpose of optimizing the flow of the lubricant under centrifugal force during rotation so as to achieve the best lubricating conditions.

In order to be able to incorporate between the housing and the ring of the present invention a system for cooling this ring that offers an adequate flow of the coolant (e.g. water) along the outer central groove and in order to ensure at the same time or in a separate construction sufficient radial space to accommodate a compression spring B suitable for keeping the outer ring 10 in the housing H (refer to Figure 6), the ring 10 verifies the following condition:

$$0.84 < \frac{DOM}{DMAX} < 0.86$$

where:

• DOM is the outside diameter for x' = 0.5

In addition, where:

• DGB is the inside diameter for x' = XC'

• DIM is the inside diameter for x' = 0.5,

the conditions

$$0.21 < \frac{W - 2XC'}{DMAX} < 0.26 \quad \text{and} \quad 1.65 < \frac{W - 2XC'}{DGB - DIM} < 2$$

optimize the axial distance between the centres of curvature of the two raceways of the ring 10 in relation to the ring's radial dimensions.

Finally, referring to the alternative embodiment illustrated in Figure 7, the entrance to the cavity or inner cylindrical surface 11b of the ring 10 may have a concave profile. For 0 < x' < 0.04, t' increases as x' increases between 0.37 and 1 with an internal profile having a constant radius of curvature with values of between R = 1.8 mm and R = 2.5 mm in order to give an oblique sliding seat E where using a two-lipped seal S, the lips having different radial extensions and sliding on the inside profile of the outer ring. The oblique seat E, combined with the abovementioned type of seal, offers better protection against external flow of contaminant in a direction parallel to the axis of rotation.

In a supplementary embodiment, the constant-section portion labelled b' may extend further, compared with the original configuration, towards the ends.

Without wishing to be bound by any specific theory about this invention, experiments conducted by the applicant demonstrate that, owing to the geometry specified above, the ring obtained at the end of the rolling phase is not subject to the formation of cracks and consequent breakages, and offers surprisingly reliable performance.

**Claims**

1. An outer ring (10) of an angular contact rolling bearing with a dual set of bearing balls, the ring being obtained by rolling starting from a thin walled metal element, wherein the ring has

   two tubular, cylindrical side portions (11, 12) with respective outer cylindrical surfaces (11a, 12a) adapted for being accommodated in a cylindrical housing (H), and

   a central portion (13) with an outer surface (13a) shaped as a groove with a U-shaped axial cross section, radially recessed with respect to the cylindrical surfaces (11a, 12a), the central portion (13) forming the outer raceways (14, 15) for two respective sets of bearing balls,

   the ring (10) being symmetrical with respect to a central, radial mid-plane (P) passing through the central portion (13); **characterised in that** the ring (10) is made of a kind of steel having a carbon content of about 1%, and that, defined

   x the abscissa, referred to an end of the ring (10), of a point lying on the axis of axial symmetry;
   w the distance between the two opposite axial ends of the ring (10);

   x' the relative position of a point having an abscissa X located on the axis of axial symmetry, defined as: $x' = \dfrac{x}{w}$

   Y the point of intersection between a mid line (M) of the ring and an axial plane;
   t the thickness of the ring, measured along a straight line perpendicular to the mid line (M) crossing the point y;
   xc' the relative position of the centre of curvature (C) of the raceways (14,15);
   T the thickness of the ring at the level of the centre of curvature (C);

   $t' = \dfrac{t}{T}$ the relative thickness of the ring (10);

   DI is the inside diameter of the ring 10 in a generic relative position x'
   DMAX is the maximum outside diameter of the ring 10 DI' is the relative inside diameter, defined as

   $DI' = \dfrac{DI}{DMAX}$ the ring provides a sequence of lengths in which the relative thickness varies as follows:

   for 0.025 < x' < 0.140    0.96 < t' < 1, with t' constant;
   for 0.20 < x' < 0.25    t' = 1;
   for 0.26 < x' < 0.28    1.01 < t' < 1.04 ;
   for 0.29 < x' < 0.40    0.98 > t' > 0.69 ;
   for 0.40 < x' < 0.42    0.81 > DI' > 0.795;
   for 0.42 < x' < 0.475    0.795 > DI' > 0.785.

2. A bearing ring according to claim 1, **characterised in that** t' = 0.89 in the neighbourhood of 0.42<x'<0.44.

3. A bearing ring according to claim 1 or 2, **characterised in that** for 0.472<x'<0.50, the value DI' of the inner diameter of the ring (10) is constant.

4. A bearing ring according to any one of the preceding claims, **characterised in that** a circumferential groove (16) of limited depth extends from the inner cylindrical surface (11b) of the ring, whereby in the interval 0.15 < x' < 0.185, 0.93 < t' < 0.90.

5. A bearing ring according to any one of the preceding claims, **characterised in that** it complies with the following condition:

$$0.84 < \frac{DOM}{DMAX} < 0.86$$

wherein:

DOM is the outer diameter for x'=0.5, and
DMAX is the maximum outer diameter of the ring (10).

6. A bearing ring according to any one of the preceding claims, **characterised in that** it complies with the following conditions:

$$0.21 < \frac{W - 2XC'}{DMAX} < 0.26 \quad \text{and} \quad 1.65 < \frac{W - 2XC'}{DGB - DIM} < 2$$

wherein:

DGB is the inner diameter of the ring (10) for x'=XC', and
DIM is the inner diameter of the ring (10) for x'=0.5.

**Patentansprüche**

1. Außenring (10) eines Schrägwälzlagers mit einem doppelten Lagerkugelsatz, wobei der Ring durch Walzen, ausgehend von einem dünnwandigen Metallelement, erhalten wird, wobei der Ring Folgendes aufweist:

zwei röhrenförmige, zylindrische Seitenteile (11, 12) mit jeweiligen zylindrischen Außenflächen (11a, 12a), die dazu ausgeführt sind, in einem zylindrischen Gehäuse (H) aufgenommen zu werden, und
einen mittleren Teil (13) mit einer Außenfläche (13a), die als eine Nut mit einem U-förmigen Axialquerschnitt geformt ist und bezüglich der zylindrischen Flächen (11a, 12a) radial ausgespart ist, wobei der mittlere Teil (13) die Außenlaufbahnen (14, 15) für zwei jeweilige Sätze von Lagerkugeln bildet,
wobei der Ring (10) bezüglich einer sich durch den mittleren Teil (13) erstreckenden mittleren, radialen Mittelebene (P) symmetrisch ist;
**dadurch gekennzeichnet, dass** der Ring (10) aus einer Stahlart mit einem Kohlenstoffgehalt von ca. 1% hergestellt ist und mit den folgenden Definitionen:

x die Abszisse, bezogen auf ein Ende des Rings (10), eines auf der Axialsymmetrieachse liegenden Punkts, ist;
w der Abstand zwischen den beiden einander gegenüberliegenden axialen Enden des Rings (10) ist;
x' die relative Position eines Punkts mit einer Abszisse X, der auf der Axialsymmetrieachse positioniert ist, definiert als x'= x/w, ist;
y der Schnittpunkt zwischen einer Mittellinie (M) des Rings und einer axialen Ebene ist;
t die Dicke des Rings, gemessen entlang einer Geraden senkrecht zur Mittellinie (M), die den Punkt y schneidet, ist;
xc' die relative Position der Krümmungsmitte (C) der Laufbahnen (14, 15) ist;
T die Dicke des Rings auf Höhe der Krümmungsmitte (C) ist;
t'=t/T die relative Dicke des Rings (10) ist;
DI der Innendurchmesser des Rings (10) in einer generischen relativen Position x' ist;
DMAX der maximale Außendurchmesser des Rings (10) ist;
DI' der relative Innendurchmesser, definiert als DI'= DI/DMAX, ist;

der Ring eine Folge von Längen bereitstellt, wobei die relative Dicke wie folgt variiert:

für 0, 025 < x' < 0,140 0,96 < t' < 1, wobei t' konstant ist;
für 0,20 < x' < 0,25 t' = 1;
für 0,26 < x' < 0,28 1,01 < t' < 1,04;
für 0,29 < x' < 0,40 0,98 > t' > 0,69;
für 0,40 < x' < 0,42 0,81 > DI' > 0,795;
für 0,42 < x' < 0,475 0,795 > DI' > 0,785.

2. Lagerring nach Anspruch 1, **dadurch gekennzeichnet, dass** t' = 0,89 in der Nähe von 0,42 < x' < 0,44.

3. Lagerring nach Anspruch 1 oder 2, **dadurch gekennzeichnet, dass** für 0,472 < x' < 0,50, der Wert DI' des Innendurchmessers des Rings (10) konstant ist.

4. Lagerring nach einem der vorhergehenden Ansprüche, **dadurch gekennzeichnet, dass** sich eine Umfangsnut (16) mit begrenzter Tiefe von der zylindrischen Innenfläche (11b) des Rings erstreckt, wobei im Intervall 0,15 < x' < 0,185, 0,93 < t' < 0,90.

5. Lagerring nach einem der vorhergehenden Ansprüche, **dadurch gekennzeichnet, dass** er die folgende Bedingung erfüllt:

$$0,84 < DOM/DMAX < 0,86$$

wobei:

DOM der Außendurchmesser für x' = 0,5 ist und
DMAX der maximale Außendurchmesser des Rings (10) ist.

6. Lagereinheit nach einem der vorhergehenden Ansprüche, **dadurch gekennzeichnet, dass** sie die folgenden Bedingungen erfüllt:

$$0,21 < (W-2XC')/DMAX < 0,26 \quad und \quad 1,65 < (W-2XC')/(DGB-DIM) < 2$$

wobei:

DGB der Innendurchmesser des Rings (10) für x' = XC' ist und
DIM der Innendurchmesser des Rings (10) für x'= 0,5 ist.

**Revendications**

1. Bague extérieure (10) d'un palier à roulement à contacts angulaires comprenant un double jeu de billes de roulement, la bague étant réalisée par laminage à partir d'un élément métallique à paroi mince, la bague comprenant :

deux portions latérales tubulaires cylindriques (11, 12) avec des surfaces respectives cylindriques extérieures (11a, 12a) prévues pour être reçues dans un logement cylindrique (H) et
une portion centrale (13) avec une surface extérieure (13a) en forme de gorge avec une section transversale axiale en forme de U, en retrait radialement par rapport aux surfaces cylindriques (11a, 12a), la portion centrale (13) formant les chemins de roulement extérieurs (14, 15) pour deux jeux respectifs de billes de roulement, la bague (10) étant symétrique par rapport à un plan médian radial central (P) traversant la portion centrale (13) ;
**caractérisée en ce que** la bague (10) est fabriquée en un type d'acier ayant une teneur en carbone d'environ 1 %, et **en ce que**, étant définis les paramètres suivantes :

x l'abscisse, en référence à une extrémité de la bague (10), d'un point situé sur l'axe de symétrie axiale ;
w la distance entre les deux extrémités axiales opposées de la bague (10) ;
x' la position relative d'un point d'abscisse X situé sur l'axe de symétrie axiale, défini par x' = x/w,
Y le point d'intersection entre un axe médian (M) de la bague et un plan axial ;
t l'épaisseur de la bague, mesurée le long d'une ligne droite perpendiculaire à l'axe médian (M) passant par le point Y ;
xc' la position relative du centre de courbure (C) des chemins de roulement (14, 15) ;
T l'épaisseur de la bague au niveau du centre de courbure (C) ;
t' = t/T l'épaisseur relative de la bague (10) ;
DI étant le diamètre intérieur de la bague 10 dans une position générique relative x',
DMAX étant le diamètre extérieur maximum de la bague (10),

DI' étant le diamètre intérieur relatif, défini par DI' = DI/DMAX,

la bague présente une série de longueurs dans lesquelles l'épaisseur relative varie comme suit :

pour 0,025 < x' < 0,140 on a 0,96 < t' < 1, avec t' étant constante ;
pour 0,20 < x' < 0,25 on a t' = 1 ;
pour 0,26 < x' < 0,28 on a 1,01 < t' < 1,04 ;
pour 0,29 < x' < 0.40 on a 0,98 > t' > 0,69 ;
pour 0,40 < x' < 0,42 on a 0,81 > DI' > 0, 795 ;
pour 0,42 < x' < 0,475 on a 0,795 > DI' > 0,785.

2. Bague de palier selon la revendication 1, **caractérisée en ce que** t' = 0,89 aux environs de 0,42 < x' < 0,44.

3. Bague de palier selon la revendication 1 ou 2, **caractérisée en ce que** pour 0,472 < x' < 0,50, la valeur DI' du diamètre intérieur de la bague (10) est constante.

4. Bague de palier selon l'une quelconque des revendications précédentes, **caractérisée en ce qu'**une gorge circonférentielle (16) de profondeur limitée s'étend depuis la surface cylindrique intérieure (11b) de la bague, et dans l'intervalle 0,15 < x' < 0,185, on a 0,93 < t' < 0,90.

5. Bague de palier selon l'une quelconque des revendications précédentes, **caractérisée en ce qu'**elle satisfait à la condition suivants :

$$0,84 < DOM/DMAX < 0,86$$

où
DOM est le diamètre extérieur pour x' = 0,5 et
DMAX est le diamètre extérieur maximum de la bague (10).

6. Bague de palier selon l'une quelconque des revendications précédentes, **caractérisée en ce qu'**elle satisfait aux conditions suivantes :

$$0,21 < (W-2XC')/DMAX < 0,26 \text{ et } 1,65 < (W-2XC')/(DGB-DIM) < 2,$$

où
DGB est le diamètre intérieur de la bague (10) pour x' = XC' et
DIM est le diamètre intérieur de la bague (10) pour x' = 0,5.

FIG.1

FIG.2

FIG.3

FIG.5

FIG.4

FIG.7

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2636903 A1
- DE 924924 C
- WO 2008056446 A1